# EUROPEAN PATENT APPLICATION

(11) **EP 3 893 043 A1**
(43) Date of publication of application: **13.10.2021**
(21) Application number: 18922283.9
(22) Date of filing: 12.06.2018
(51) Int. Cl.: G02C 5/14, G01S 19/00

(54) **GEOLOCATABLE SPECTACLES**

(71) Applicant: Pauvazal, S.L., 28223 Pozuelo de Alarcón - Madrid (ES)
(72) Inventor: PAULET VÁZQUEZ, Alberto, 28223 Pozuelo de Alarcón - Madrid (ES)
(74) Representative: Falcon Morales, Alejandro
(86) International application number: PCT/ES2018/000054
(87) International publication number: WO 2019/238982

(57) **Abstract**

The invention relates to geolocatable eyeglasses, comprising a frame (6) to which a temple (7) is connected via hinges (9) on each side of the frame (6), wherein at least one temple comprises a geolocation device, wherein the geolocation device is built into the temple, and wherein the geolocation device comprises an antenna (6) built into the temple (2), configured to connect to at least one global navigation system, a control board (3), a socket (4) and a switch (5) configured to activate or deactivate the geolocation device, wherein the switch is formed by a graphene surface, which is on the same level as the surface of the temple (2).

## Description

### OBJECT OF THE INVENTION

The object of the invention is a pair of eyeglasses that have a global positioning device built into one of the temples, such that the geographical position of the eyeglasses can be located on a map, for instance if the wearer should get lost. Eyeglasses, specifically optical lenses for children and older people, apply in the optical industry.

### BACKGROUND TO THE INVENTION AND TECHNICAL PROBLEM TO BE SOLVED

There are eyeglasses with built-in geolocation devices aimed at the sport market, such as eyeglasses for skiing or cycling. In this type of eyeglasses, size of the eyeglasses is not a problem since the dimensions of the eyeglasses are such that the geolocation device can be part of the frame or attached to the straps used by the wearer to hold the eyeglasses in place.

Furthermore, the ability to locate a child who has become lost in a crowd is important, given that children are generally excitable and are continuously moving about, and there are no known eyeglasses on the market that include in their constituent elements a built-in positioning device to locate the eyeglasses, and, in consequence, the wearer, other than those systems in which a foreign element is attached to the eyeglasses.

There are no known eyeglasses that integrate a geolocation device in a temple without this being a separate element from the temple, resulting in an additional element with dimensions unsuitable for normal use of eyeglasses.

All attempts developed thus far to provide some form of geolocation system base their operation on a communications network and, as such, require a mobile phone line in order to transmit their position, resulting in an additional cost which users generally find excessive, meaning such embodiments have been less successful than envisaged.

However, the eyeglasses which form the object of the invention provide a geolocation system based on GPS technology, which does not involve any additional cost since the GPS system's satellites send waves that are free of charge, and position is transmitted through another network that is also free of charge.

### TECHNICAL SECTOR

The field of application of the present invention relates to the eyeglasses manufacture industry, focusing particularly on the field of manufacture of eyeglasses for children and older people.

### EXPLANATION OF THE INVENTION

The object of the invention is a pair of geolocatable eyeglasses, comprising a frame to which a temple is connected by means of hinges on each side of the frame, such that at least one temple comprises a geolocation device, wherein the geolocation device is built into the temple.

The geolocation device comprises a first antenna built into the temple which is configured to connect to at least one global navigation system, a second antenna built into the temple which is configured to transmit the position of the eyeglasses over a UNB network, a control board, a socket, and a switch configured to activate or deactivate the geolocation device.

The geolocation device's switch comprises a graphene surface on the same level as the surface of the temple.

The geolocatable eyeglasses which form the object of the invention comprise a plurality of light elements configured to show the status of the geolocation device.

In the geolocatable eyeglasses which form the object of the invention, the temple comprising the geolocation device comprises a protective cover for the components of the geolocation device.

In the geolocatable eyeglasses which form the object of the invention, the switch is configured for operation by pressing for a certain length of time, with such pressing for a certain length of time resulting in the geolocation device being activated or deactivated.

In the geolocatable eyeglasses which form the object of the invention, the geolocation device's socket comprises a micro USB connector.

The geolocatable eyeglasses which form the object of the invention comprise a battery housed in the control plate and connected to the socket.

### SHORT DESCRIPTION OF THE DRAWINGS

In order to complement and help understanding of the characteristics of the invention, a sheet of drawings is attached in which, for illustrative and non-limiting purposes, the following have been represented:

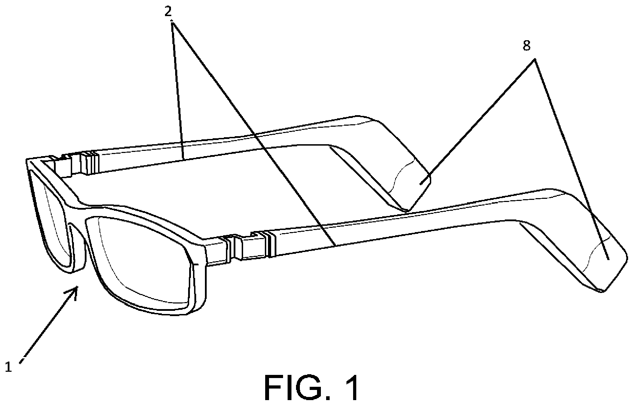

Figure 1.- Shows a perspective view of the eyeglasses which form the object of the invention.
Figure 2.- Shows a perspective view of a temple of the eyeglasses which form the object of the invention.
Figure 3.- Shows a view of Figure 2 having removed the cover that protects the electronic components of the geolocation device of the eyeglasses which form the object of the invention.

Below is a list of the numerical references used in the Figures and the elements they refer to:
1.- eyeglasses,
2.- temple,
3.- control plate,
4.- socket,
5.- switch,
6.- first antenna,
7.- second antenna,
8.- cover,
9.- protective cover,
10.- battery,
11.- lighting elements and

### PREFERENTIAL EMBODIMENT OF THE INVENTION

As can be seen in the figures, the eyeglasses (1) which form the object of the invention have two temples (2), one of which houses a series of electronic components which form a geolocation device, such that the geolocation of the wearer of the eyeglasses can be ascertained.

The geolocation device comprises:
- a first antenna (6) built into the temple (2), configured to pick up the radio signal of one of the global navigation systems (GPS, Galileo, BeiDou, etc.);
- a second antenna (7), configured to broadcast the geolocation of the eyeglasses via UNB (Ultra Narrow Band) networks;
- a control board (3), which, in the preferential embodiment of the invention, is a printed circuit board;
- a battery (10) built into the control plate (3);
- a socket (4) to supply the battery (10);
- a plurality of light elements (11), configured to show the status of the geolocation device, which, in the preferential embodiment of the invention, are formed by a plurality of LED lights;
- a switch (5), configured to activate or deactivate the geolocation device; and
- a cover (9) to protect the socket (4).

Both the first antenna (6) and the second antenna (7) of the geolocation device are built into the body of the temple (2), and both the first antenna (6) and the second antenna (7) are attached to the control plate (3) at different connection points, such that the control plate (3) handles all interaction between the two antennas (6, 7). Furthermore, the two antennas (6, 7) operate simultaneously.

The solution of using two antennas is because the eyeglasses are located near the head of the wearer and the GPS signal should not be absorbed by the head, so the second antenna (7) acts as a reflector of the GPS signal picked up by the first antenna (6) and moves it away from the wearer's head, thus preventing this part of the GPS signal from being directed to the wearer's head, thereby increasing safety in use of the eyeglasses which form the object of the invention.

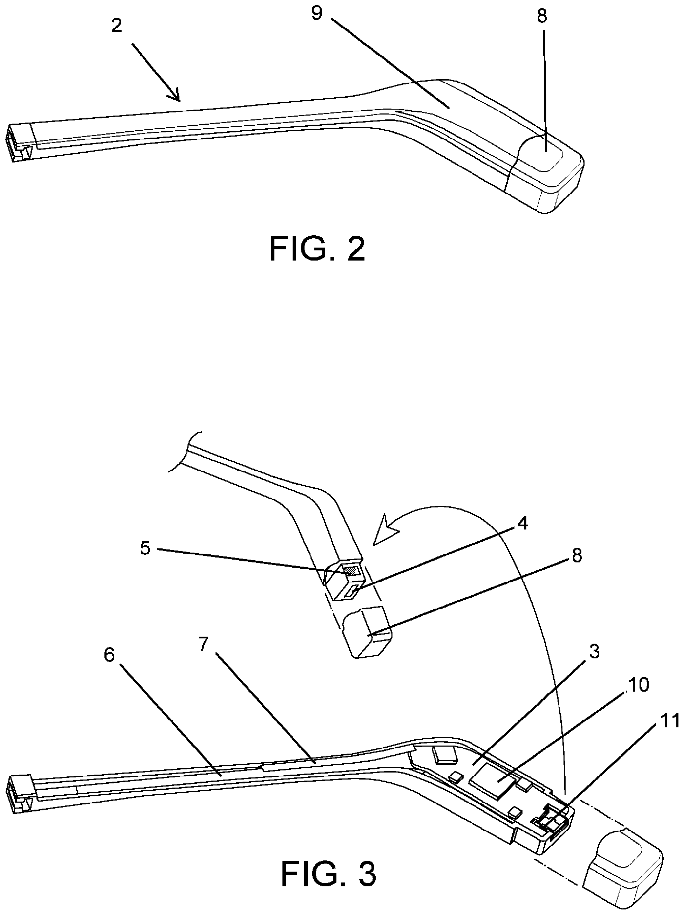

All components of the geolocation device of the eyeglasses which form the object of the invention are located inside one of the temples (2) of the eyeglasses, with said temple (2) comprising a protective cover (9) which can be removed should the aforementioned components need to be repaired (see Figure 3, where the cover has been removed to show inside the temple).

The switch (5) of the eyeglasses which form the object of the invention is formed by a graphene surface, such that the user can act on the switch (5) by touching the graphene surface for a certain length of time, with such touching for a certain length of time resulting in the geolocation device being activated or deactivated. The switch (5) is therefore built into the surface of the temple (2), thus ensuring the temple has no protrusions or discontinuities, which can not only be uncomfortable but also dangerous for the wearer of the eyeglasses as they are close to parts of the human body that are sensitive to impact, such as the eyes or the skin of the ears.

This solution means that it is not necessary to incorporate mechanical elements, which are associated with areas where dust and humidity can build up, in order to activate the geolocation device.

The solution of making the switch in the eyeglasses which form the object of the invention from graphene material therefore allows improved fulfilment of IP level in terms of anti-humidity standards, simplification of electronics, and greater durability of the assembly.

In the preferential embodiment of the invention, the geolocation device's socket (4) is a micro USB connector.

The battery (10) of the geolocation device is built into the control plate (3), and receives the energy stored by the battery (10) through the socket (4) in order to operate the geolocation device of the eyeglasses which form the object of the invention.

The invention should not be understood as limited to the preferential embodiment described herein, but rather the scope of the invention is defined by the Claims below.

## Claims

1. Geolocatable eyeglasses, comprising a frame to which a temple on each side of the frame is connected by means of hinges, **characterised in that** at least one temple comprises a geolocation device, wherein the geolocation device is built into the temple (2), and wherein the geolocation device comprises:
- a first antenna (6) built into the temple (2), configured to connect to at least one global navigation system;
- a second antenna (7) built into the temple (2), configured to transmit the position of the eyeglasses over a UNB network;
- a control plate (3);
- a socket (4);
- a switch (5), configured to activate or deactivate the geolocation device;
wherein the switch (5) comprises a graphene surface, which is on the same level as the outer surface of the temple (2).

2. Geolocatable eyeglasses according to Claim 1, **characterised in that** they comprise a plurality of light elements (11) configured to show the status of the geolocation device.

3. Geolocatable eyeglasses according to either Claim 1 or 2, **characterised in that** the temple (2) comprising the geolocation device comprises a protective cover (9) for the components of the geolocation device.

4. Geolocatable eyeglasses according to any of the Claims 1 to 3, **characterised in that** the switch (5) is configured for operation by touching for a certain length of time, with such touching for a certain length of time resulting in the geolocation device being activated or deactivated.

5. Geolocatable eyeglasses according to any of the Claims 1 to 5, **characterised in that** the socket (4) of the geolocation device comprises a micro USB connector.

6. Geolocatable eyeglasses according to any of the Claims 1 to 6, **characterised in that** they comprise a battery (10) housed in the control plate (3), with said battery (10) being connected to the socket (4).
